# EUROPÄISCHE PATENTANMELDUNG

(11) **EP 3 744 162 A1**
(43) Veröffentlichungstag der Anmeldung: **02.12.2020**
(21) Anmeldenummer: 20401034.2
(22) Anmeldetag: 28.05.2020
(51) Int. Cl.: A01C 1/04

(54) **SAATPAKET**

(30) Priorität: 28.05.2019 DE 102019114223
(71) Anmelder: Zwahlen, Adrian, 3280 Murten (CH)
(72) Erfinder: Zwahlen, Adrian, 3280 Murten (CH)
(74) Vertreter: Haschick, Gerald

(57) **Zusammenfassung**

Die Erfindung betrifft ein Saatpaket zur Bewaldung von potenziellen und rekonstruierten, natürlichen Vegetationen in ländlichen Gebieten, wobei eine kissenähnliche Form mit einer Umhüllung aus dem Material Schafwolle hergestellt ist, welche den Inhalt in der prallen Sonne leicht kühlt, wetterbeständig ist, nach einer gewissen Zeit verrottet und nicht zuletzt auch als natürlicher Langzeitdünger dient.

## Beschreibung

Die Erfindung betrifft ein Saatpaket zur Wiederherstellung von potenziellen und rekonstruierten, natürlichen Vegetationen in ländlichen Gebieten, zur Rekultivierung, Wiederbewaldung nach Brandrodungen, Übernutzungserscheinungen, Holzschlag und Überschwemmungen.

Das Saatpaket ist als kissenähnliche Form mit einer Umhüllung aus dem Material Schafwolle hergestellt, welche den Inhalt in der prallen Sonne leicht kühlt, wetterbeständig ist, nach einer gewissen Zeit verrottet und nicht zuletzt auch als natürlicher Langzeitdünger dient.

Die Bewaldung von potenziellen und rekonstruierten, natürlichen Vegetationen in ländlichen Gebieten wird aus verschiedenen Gründen - je länger, je mehr - eine große Herausforderung. Bäume anziehen und auspflanzen kostet enorm Zeit, ist mit großem Aufwand verbunden, entsprechende finanzielle und technische Mittel sind nötig, und der Wille der örtlichen Bevölkerung muss vorhanden sein.

Auf dem Markt sind keine entsprechend ähnlichen Produkte vorhanden, welche die erfindungswesentlichen Merkmale aufweisen. Bekannt sind lediglich von Hand oder maschinell geformte Ballen aus Erde mit Samen von Bäumen - siehe SEEDBALLS Kenya. Die Seedballs haben nur eine Funktion, nämlich den Samen zum Keimen bringen. Die Seedballs sind klein, haben praktisch keinen Wasservorrat. Seedballs haben auch keine Mehrfachfunktion in dem Sinn, dass sich verschiedene Samen mit verschiedenen Aufgaben und Funktionen in einem Seedball befinden. Die Saatkugeln lösen nur im Ansatz die Aufgabe der erfindungsgemäßen Saatpakete. Kugeln rollen nach dem Ausbringen meist in Kuhlen oder Senkungen zusammen und bilden somit keinen regelmäßigen Bewuchs.

In der Natur verbreiten zum Beispiel Flughunde wertvollen Samen durch ihren Kot, das heißt, der Samen wird über den Kot ausgeschieden. Der Kot dient dem Samen nun als Keimsubstrat, und wuchsfördernde Stoffe dringen bis in die Wurzeln vom Keimling und in den Mutterboden.

Aufgabe der Erfindung ist es, dieses Samen- und Kotsystem zu verbessern, zu perfektionieren und großflächig mit möglichst kleinem Aufwand anzuwenden. Die Inhaltsstoffe sollen nur natürliches Basismaterial enthalten, also alles aus der Natur und abbaubar innerhalb einer nützlichen Frist. Das gewählte Material soll folgende Eigenschaften ausweisen, wie Wasser speichern, Hitze absorbieren, Witterungsschutz, schützende Umhüllung vor Vogelfraß, Aus- und Abschwemmen vom Wachstumssubstrat, abweisender Geruchsträger gegen Würmer, Ameisen, Schnecken und anderen Kleintieren.

Die Erfindung wird dadurch gelöst, dass eine kissenähnliche Form mit einer Umhüllung aus dem Material Schafwolle hergestellt ist, welche den Inhalt in der prallen Sonne leicht kühlt, wetterbeständig ist, nach einer gewissen Zeit verrottet und nicht zuletzt auch als natürlicher Langzeitdünger dient.

Eine weitere Eigenschaft der Erfindung ist, dass die Saatpakete in trockenem Zustand, auf Vorrat und in großen Mengen hergestellt werden können, ohne dass sie gleich nach der Herstellung verwendet werden müssen. Die Herstellung im Trockenzustand bedeutet, dass die Samen im Saatpaket nicht keimen werden. Die Keimung und das Wachstum der Samen werden erst durch das Zuführen von Feuchtigkeit erreicht und in Gang gesetzt. Unmittelbar vor dem Einsatz werden die Saatkissen in einem Wasserbad getränkt. Das bis dahin trockene Wachstumssubstrat aus Kokosfasern saugt sich mit Wasser voll und dehnt sich in der lockeren Schafwollhülle aus. Das Saatpaket nimmt damit die Form eines Kissens an. Die Schafwollhülle verhindert ein Auseinanderfallen des Wachstumssubstrats. Substrat, Dünger und Samen verbleiben so in der angedachten, vorgegebenen Einheit und dem Verbund. Ohne Eintauchen in ein Wasserbad zur Wasseraufnahme vor der Ausbringung sind die Saatpakete nur in einer regenreichen Zeit einsetzbar.

Ein weiterer Vorteil ist, dass die Saatpakete trocken hergestellt werden können und somit auch in großen Mengen lagerfähig sind. Die Keimung beginnt erst mit dem Zusetzen von Wasser. Das kann ein Eintauchen in ein Wasserbad sein vor dem Ausbringen, Austragen, Verteilen oder Abwurf aus dem Flugzeug, oder in trockenem Zustand während der Regenzeit. Das Wachstumssubstrat saugt sich dann mit dem Monsunregen voll.

Diese kissenähnliche Form kann gebranntes, unlasiertes, gemahlenes Tongut, Erde, Holzspäne, Wachstumssubstrat und verschiedene Düngerarten beinhalten.

Alle Komponenten bestehen aus natürlichen, nachwachsenden Ressourcen und sind in jedem Fall biologisch abbaubar.
1. Schafwolle, zu Nadelflies verarbeitet
2. Keim- und Wachstumssubstrat aus Kokosfasern
3. verschiedene Düngersorten und Arten
4. Klebstoffe aus Naturharzen oder Fischkleister

Die Herstellung der Saatpakete kann überall erfolgen. Das Ziel ist, dass die Herstellung der Saatpakete möglichst nahe am Verwendungsort erfolgt. Die meisten Grundkomponenten sind örtlich vorhanden und/oder herstellbar. Die Maschinen zur Herstellung der Saatpakete sind Produkte aus der EU, welche von branchenführenden Unternehmen hergestellt und weltweit inklusive Servicepackage vertrieben werden.

Die Schafwolle darf nur bis zu einem sogenannten Nadelflies verarbeitet werden. Wird die Wolle weiterbearbeitet, entsteht ein immer dichterer Filz, der erst nach einer sehr langen Zeit verrottet. Schafwolle entsteht praktisch überall auf der Welt und ist ein natürlicher, voll ökologischer Grundstoff für die Herstellung von Saatpaketen. Die Kokosnuss wird in vielen südlichen Breitengraden rund um den Globus kultiviert.

Die maschinelle Herstellung wird nachfolgend beschrieben.

Die Schafwollhülle kann aus zwei Teilen bestehen, einer Unterseite und einer Oberseite. Die zwei Hüllen können im Herstellungsprozess miteinander verbunden werden. Vorgesehen ist, dass die beiden Hüllen durch eine Klebetechnik miteinander verbunden werden. Als Kleber können Naturharze, ein Leim aus Knochen oder Fischkleister verwendet werden.

Der Herstellungsablauf erfolgt in verschiedenen Schritten unter Zuführung der einzelnen Komponenten, wie die Kokosfasern, der Düngeranteil und die verschiedenen, vorgesehenen Samen, abgestimmt auf die zu begrünende Fläche und auf die Örtlichkeiten.

Die einzelnen Verarbeitungsschritte werden nachfolgend beschrieben.

### Schritt 1:

Hier wird die untere Hülle, das sogenannte Nadelflies, ab einer Rolle wie ein Band in die Fabrikationsstraße gezogen. In diesem Schritt kann das Nadelflies mit einem speziellen, natürlichen Geruchsstoff besprüht werden, um den Samen vor möglichem Fraß durch Schädlinge zu vermeiden.

### Schritt 2:

Hier wird ein Gemisch, das sogenannte Wachstumssubstrat aus Kokosfasern und gebranntem, gemahlenen Ton und oder ähnlichen Substraten in eine für die Fabrikation verwendbare, zweiteilige Form gepresst. Die Pressform kann quadratisch oder rechteckig in länglicher Form sein. Die Unterseite der Form ist flach, die Oberseite der Form weist zentral in der Mitte eine kleine Kuhle auf, als Fläche ca. 1/4 der Pressform. Die Kuhle dient zur Aufnahme von größeren Samen, Sämlingen, so dass die vorgepressten Substratplatten aus Kokosfasern während der Herstellung und später bei der Lagerung nicht brechen. Die Höhe der Pressform ist ca. 10 mm. Die Grundmaße der Pressform sind 50 mm x 50 mm oder 50 mm x 80 mm. Die Maße der Pressform sind nicht verbindlich und können nach Bedarf auf andere Bedürfnisse angepasst werden.

### Schritt 3:

Die untere, nun gepresste Kokosfaserplatte mit der Kuhle wird im Produktionsablauf auf das Schafwollnadelflies gelegt.
Die Kokosfaserplatten werden in einem externen Schritt in eine bestimmte Form und in gewünschte Maße L x B x H gepresst und sind ca. um 1/3 schmaler als das Band aus Schafwollnadelflies.
Die Kokosfaserplatten werden in einem vorbestimmten Abstand während des Produktionsablaufes zueinander auf das Schafwollnadelfliesband gelegt. Der Abstand ist die doppelte Breite freie Fläche (2 x 1/3) vom Schafwollnadelfliesband in der Breite zu den Kokosfaserplatten.

### Schritt 4:

Es folgt die Einstreuung der verschiedenen Grassamen und die Einlage der bestimmten Busch- und Baumsortensamen auf die vorgepresste, untere Kokosfaserplatte. Die Einstreuung der größeren Pflanzenarten, von Buschwerk oder Bäumen kann hier wahlweise auch auf mehrere Saatpakete verteilt werden, so dass zum Beispiel nur jedes dritte, vierte, fünfte oder zehnte Saatpaket Samen für Büsche oder Bäume enthält.

### Schritt 4a:

Für besondere, erschwerte Anwendungen der Saatpakete können die beiden Kokosfaserplatten durch einen oder mehrere kleine Klebepunkte miteinander verbunden werden. Der Klebstoff kann aus einem Grundstoff von Knochenleim, Naturharzen, Pflanzenstärke oder Fischkleister bestehen.

### Schritt 5:

Hier wird aus demselben Wachstumssubstrat, wie im Schritt 2 beschrieben und verwendet, der obere Teil der beiden Kokosfaserplatten in eine den gleichen Maßen wie im Schritt 2 verwendete Form gepresst. Sowohl die Unter- als auch die Oberseite der Form ist hier flach. Die Höhe der Pressform ist ebenfalls ca. 10 mm. Die Grundmaße der Pressform entsprechen den Pressformmaßen aus Schritt 2.

### Schritt 6:

Die vorgepresste Deck- oder obere Kokosfaserplatte wird aufgesetzt.

### Schritt 7:

Die hervorragenden Ränder vom unteren Schafwollflies werden allseitig mit Leim besprüht, getränkt oder bestrichen.

### Schritt 8:

Hier wird das zweite Schafwollnadelflies als Deckflies in die Fabrikationsstraße zugeführt. Das Nadelflies kommt auf die obere Kokosfaserplatte zum Liegen und wird mit Druck und Wärme auf das untere Schafwollflies gepresst. Druck und Wärme haben die Aufgabe, dass sich die untere und obere Hülle vom Nadelflies miteinander unter Zuhilfenahme des Bindemittels Leim fest verbinden. Die Hitze soll das Bindemittel verflüssigen, so dass eine verbesserte Eindringung in die obere und untere Schafwollnadelflieshüllenstruktur erfolgt und einen ausgezeichneten Verbund der unteren und oberen Schafwollnadelflieshülle bewirkt.

### Schritt 9:

Nach einer kleinen Abkühl- oder Trocknungszeit der Leimstelle ist der maschinelle Herstellprozess beendet.

### Schritt 10:

Hier wird das zusammengefügte, verklebte Unter- und Oberband quer zur Fabrikationsstraße in bestimmten Abständen geschnitten, so dass aus dem Band nun einzelne Stücke, das fertige Saatpaket oder Saatkissen entsteht.

### Schritt 11:

Die fertigen Saatpakete als Kissenformen können jetzt in Säcke, Kisten, auf Paletten oder in andere Vorratsbehälter abgefüllt werden und sind zur Auslieferung und zur Anwendung bereit. Bis zur Verwendung sollten die fertigen Saatpakete trocken, kühl und dunkel gelagert werden.

Die Herstellung der Saatpakete erfolgt in einem trockenen Zustand ganz ohne Wasser, so dass der Samen nicht quillt und vorzeitig zum Sprießen kommt. Die Saatpakete werden erst vor dem Ausbringen vor Ort benetzt und mit Wasser durchtränkt.

Weiterhin sind verschiedene Samen enthalten, welche folgende Aufgaben haben, wie
- Schatten für die Hauptpflanze während dem Keimen
- schnelle Begrünung und Wurzelbildung
- Gräser
- Wurzeln halten das Saatpaket am Mutterboden fest
- die Hauptpflanze, bestehend aus 2 bis 3 Samen.

Die Zusammensetzung der Samen und auch der anderen Inhaltsstoffe kann jeweils auf die örtlichen Gegebenheiten und Bedürfnisse abgestimmt werden.

Die Produktion erfolgt zum großen Teil maschinell und dezentral. Der Produktionsstandort muss nicht mit dem Einsatzort übereinstimmen.

Das Saatpaket wird vor Ort und vor dem Verteilen mit Wasser reichlich gesättigt.

Für das Ausbringen oder Verteilen werden nachfolgend drei Varianten beschrieben.

### Variante 1: maschinell vor Ort, ähnlich einem Minenlegepanzer

Die Platzierung der Saatpakete im Gelände kann mittels Zentrifugalkraft ab einer Plattform bzw. einem Fahrzeug erfolgen. Durch die Fahrtgeschwindigkeit und die Veränderung der Zentrifugal- oder Schleuderkraft kann die Anzahl der Saatpakete pro Quadratmeter verändert werden.

Die Streu- oder Auswurfbreite ist durch die Zentrifugalkraft zu regeln. Grundsätzlich soll eine Streubreite von ca. 50 Meter erreicht werden. Durch einen Verstellmechanismus und die Fahrgeschwindigkeit kann die Streudichte verändert werden. Die Dichte der Streuung wird an den jeweiligen Ort und den Bedarf angepasst.

### Variante 2: mit einem Flugzeug

Die Saatpakete können auch mit einem Flugzeug ausgebracht werden. Es bedingt, dass das Flugzeug in niedriger Höhe über das Zielgebiet fliegen kann. Die Streuung erfolgt über eine Klappe oder Rampe mit rillenähnlichen, fächerförmig angelegten groben Wellnuten, damit eine breite Streuung erreicht wird. Die Saatpakete können auch mit einem kleinen Fallschirm versehen werden.

### Variante 3: durch Manpower

Die Saatpakete können auch von Hand gestreut werden. Allerdings ist der Aufwand groß und die Wirkung flächenmäßig eher klein. Diese Variante ist jedoch in der Umgebung von bewohntem Gebiet angebracht.

Die Abmessungen der Saatpakete können von unterschiedlicher Größe sein, zum Beispiel 10 x 10 Zentimeter.

Die benötigte Anzahl von Saatpaketen pro Quadratmeter ist von verschiedenen Bedürfnissen und Anforderungen abhängig:
1.Bedarf an Grasinseln (kurzfristig)
2.Stauden, Buschwerk (mittelfristig)
3. Bäume (langfristig) .

Weiterhin ist es orts- und bodenabhängig, welche Arten von Saatpaketen eingesetzt werden.

Die Witterung hat einen weiteren entscheidenden Einfluss auf das Wachstum der Saatpakete:
- Für eine Begrünung und Grasnarbe bedarf es mehrerer Saatpakete pro Quadratmeter.
- Für Stauden und Buschwerk sind in der Regel ein bis zwei Saatpakete pro Quadratmeter ausreichend.
- Für Kleingehölz und Bäume sind zwei bis drei Stück auf einer Fläche von zehn Quadratmetern optimal.

Die Saatpakete sind am besten geeignet für potenzielle und rekonstruierte, natürliche Vegetationen in ländlichen Gebieten, welche wiederum mit Buschwerk und Bäumen begrünt und bestockt werden sollen. Ein Saatpaket hat mehrere Funktionen, von der Aufgabe der Bildung einer neuen Grasnarbe bis zu Buschwerk und Gehölzen.

Die Erfindung bezieht sich auf den Aufbau der einzelnen Saatpakete, nämlich auf die Anordnung, wo, wie viel und welche Samen im Saatpaket platziert werden.

Saatpakete rollen beim Ausbringen nicht in Bodensenkungen. Sie bleiben da, wo sie hingefallen sind. Ohne fremde Kraft bleiben sie am selben Punkt. Sie können daher auch in hügeligem Gelände sowie in ansteigendem Gelände benutzt und eingesetzt werden. Die Samenwurzeln durchwurzeln zuerst das Substrat und dringen dann in die Muttererde, in den Boden vor.

Die Saatpakete können maschinell in großen Mengen hergestellt werden. Ein Saatpaket sieht einem Kissen bzw. von der Form her den herkömmlichen Ravioli ähnlich und hat flache Ränder.

Des Weiteren können verschiedene Samen zwischen zwei Kokosfaserplatten liegen. Der Aufbau dieses Saatpaketes ähnelt einem Sandwich.

Es beinhaltet mehrere verschiedene Samen und Samenarten, und es werden mehrere Komponenten von unterschiedlichem Dünger im Saatsubstrat beigemischt, wie zum Beispiel Kurz-, Mittel- und Langzeitdünger, der auf die zukünftigen Keimlinge und Pflänzlein angepasst und optimiert wird.

Weiterhin sind Geruchsstoffe enthalten, welche die Tiere vor dem Fraß der Saatpakete abhalten.

Außerdem enthalten die Saatpakete auch Grassamen, welche in einem ersten Schritt zu kleinen grünen Inseln wachsen, größer werden, sich ausdehnen und mit der Zeit wieder eine durchgehende Grasnarbe bilden. Von Vorteil sind schnellwachsende Grassamen, welche in einem ersten Schritt den zarten Sprossen der Baumsämlinge als Schattenspender dienen.

Bei dem Saatpaket handelt es sich um eine hitzeabsorbierende Verpackung, welche sich nach einer bestimmten Zeit auflöst und auch zu wertvollem Humus wird. Die Verpackung ist wassersaugend, luftdurchlässig, aber stabil genug, so dass die Saatpakete weder beim Auswerfen noch bei der Landung auf der Erde auseinanderfallen noch auseinanderbrechen.

Mit dem Wurfmaschinen-System lassen sich große Flächen schnell und einfach begrünen. Die Anzucht von Saat und kleinen Pflänzchen, die dann durch Handarbeit und großem Aufwand in der Natur gepflanzt werden müssen, entfällt.

Die Wurfmaschinen können überall eingesetzt werden. An einem Tag werden mit dieser Lösung mehrere Quadratkilometer Fläche mit Saatpaketen ausgelegt. Nach einem erfolgreichen Einsatz in einer Gegend können die Wurfmaschinen mit einem LKW in ein anderes Gebiet transportiert werden.

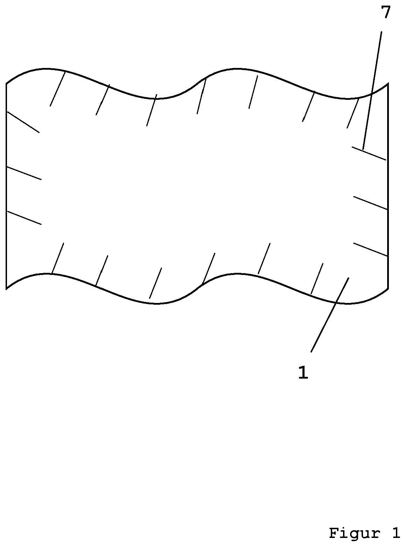

In der Figur 1 ist ein Saatpaket 1 ersichtlich, wobei man die äußerlichen, am Rand befindlichen Klebungen 7 zur seitlichen Abdichtung des Saatpaketes 1 erkennt.

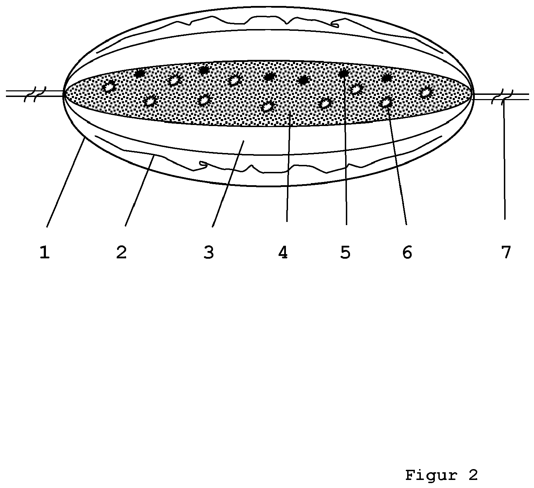

Aus der Figur 2 heraus ist ein Saatpaket 1 mit Inhalt dargestellt, wobei das Saatpaket 1 und die äußere Umhüllung Schafwolle 2 durch die Klebung 7 dicht in vollem Umfang verschlossen und nachfolgend Geruchsstoffe 3 gegeben sind und innerhalb des Saatpaketes 1 eine Ton-Erde-Holz-Mischung mit Dünger 4 bzw. Grassamen 5 und Baumsamen 6 als Sameninhalt des Saatpaketes 1 vorhanden sind. Die jeweiligen Inhalte des Saatpaketes 1 können sich je nach Anwendungsfall - wie schon beschrieben - ändern. Auf jeden Fall ist das Saatpaket 1 aus der äußeren Umhüllung Schafwolle 2 in seinem vollen Umfang immer dicht verschlossen, vorzugsweise durch eine Klebung 7. Die Form des Saatpaketes ist vorzugsweise rechteckig.

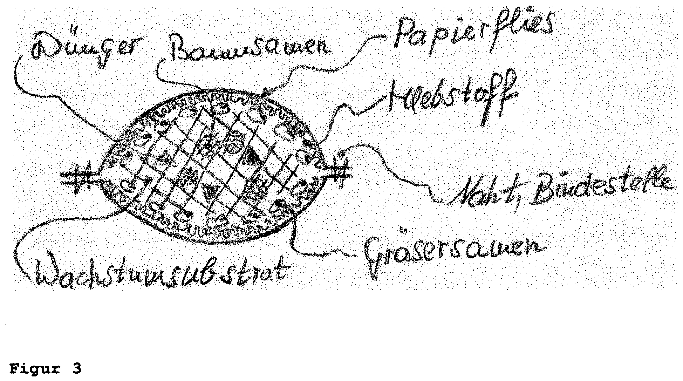

Eine weitere Ausführungsform wird mit der Figur 3 beschrieben.

Diese betrifft eine Erweiterung der Herstellungsart, mittels einem mit Wachstumssubstrat gefüllten Papierhüllflies, ähnlich einem Teebeutel, umhüllt von einem Schafwollflies in Form ähnlich einer Ravioli, einem kleinen Säcklein oder einer etwas rundlichen, länglichen Wurstform.

Gegeben ist ein loses Gemisch vom Wachstumssubstrat, dabei wurde die Saatsubstratmischung inklusive der verschiedenen Beigaben und Geruchsstoffe gegen Schädlinge schon beschrieben, vorwiegend aus Pflanzenfasern, Dünger und Baum- oder Gehölzsamen, umschlossen von einem Papierflies, ähnlicher Art eines Haushaltpapiertuches, welches auf der Innenseite vom Beutel mit Grassamen beschichtet ist. Die Ränder vom Papierfliesbeutel sind mechanisch verbunden, verpresst. Die Ränder vom Beutel können auch mit einem natürlichen Klebstoff oder mittels einer Naht mit einer speziellen Nähmaschine miteinander verbunden werden.

Als Hüllflies eignet sich zum Beispiel ein Gewebe, ein Filterstoff, Stoff aus Fasern einer Pflanze, wie zum Beispiel der Manilafaser aus Musa oder der Bananenfamilie. Eine Verwendung von Recyclingpapier ist ebenfalls möglich. Das Papier muss sehr saugfähig sein und sich innerhalb einer kurzen Zeit nach der Benetzung mit Wasser in einem Wasserbad auflösen.

Nach der Auflösung vom Papierhüllflies saugt sich das Wachstumssubstrat mit Wasser voll. Vom Trockenzustand bis zur vollen Sättigung mittels Wasser vergrößert sich das Volumen vom Wachstumssubstrat ungefähr um das Drei- bis Fünffache. Die trockene Wachstumssubstrat-Füllmenge ist so bemessen, dass nach der Wassersättigung durch das Wachstumssubstrat der den Papierfliesbeutel umhüllenden Schafwollfliessack ganz ausgedehnt bis leicht gespannt ist. Die Maße vom Schafwollfliessack werden entsprechend dem Endvolumen der wassergesättigten Wachstumssubstrat-Menge ausgelegt und bemessen.

Der fertige Papierfliesbeutel mit Wachstumssubstrat und Pflanzensamen wird in eine vorgefertigte Schafwollflieshülle, ähnlich einem Schlauch, gelegt. Die Hülle weist eine leicht längliche Form auf. Die Hülle wird vorab einer Füllung längsseitig auf einer Seite zu genäht. Die Hülle wird an beiden Enden mittels einer Schnürung zugebunden und ähnlich einer Wurst verschlossen.

Die Lösung der Papierfliesbeutel ist das Zusammenhalten der losen Saatsubstratmischung, des Düngers und der Pflanzensamen.

Eine weitere Eigenschaft ist, dass der auf der Papierfliesbeutel-Innenseite, mit Klebstoff befestigte Grassamen sozusagen nun am Paketrand, praktisch an der Innenseite vom Schafwollflies, zum Liegen kommen.

Ist der Grassamen praktisch auf der Innenseite der Schafwollfliesaußenhülle platziert, wird eine schnelle Keimung mit einer anschließenden, das Schafwollflies durchdringenden Verwurzelung direkt mit der Erde erreicht. Innerhalb einer nützlichen Frist wird das Saatpaket durch die wachsenden Wurzeln der Keimlinge in die Erde vor möglichem Wegschwemmen geschützt. Durch die Verwurzelung direkt in der Erde wird im weiteren der Wasserhauthalt im Saatpaket entlastet und über eine längere Zeit vorhanden sein, da die Keimlinge und Pflänzchen das zum Wachstum benötigte Wasser vermehrt und über ihre stetig ins Erdreich wachsenden Wurzeln aus der unter dem Saatpaket liegenden Erde beziehen.

Nachfolgernd werden die Fabrikationsschritte des Papierfliesbeutels beschrieben.
1. In einzelnen Fabrikationsschritten wird zu aller erst das Papierflies auf die anzuwendenden Maße zugeschnitten. Danach erfolgt eine Besprühung mit einem natürlichen Klebstoff. Der Klebstoff hat die Aufgabe, dass der Grassamen auf der Papierfliesoberfläche festgehalten wird, ähnlich dem bereits bekannten Saatstreifen. Die Besprühung erfolgt auf der vorgesehenen Innenseite vom Papierfliesbeutel.
2. Danach kommt die vorgesehene und vorgemischte Menge an Saatsubstrat von oben mittig auf das Papierflies. Das Saatsubstrat enthält auch ein Gemisch an natürlichem Dünger mit verschiedenen Abbauzeiten.
3. Anschließend werden der ausgewählte Baum-, Stauden- oder Blumensamen oder das Kleingehölz ebenfalls von oben in die Wachstumssubstratmischung beigegeben.
4. Dann wird das Deckpapierflies von oben aufgelegt. Das Deckpapierflies hat die gleichen Maße und Eigenschaften wie das untere Deckpapierflies und weist ebenfalls Grassamen auf.
5.Nachfolgend werden die Papierfliesränder vom unten- und obenliegenden Papierflies mittels einer Pressung, ähnlich einer Naht oder Stanzung reißverschlussartig verschlossen. Als Alternative können die Ränder auch mit einem natürlichen Klebstoff verbunden oder auch mit einer Nähnaht mit biologisch abbaubarem Faden versehen werden.

Nun ist der gefüllte Papierfliesbeutel für die Weiterverarbeitung bereit. Die fertigen Beutel können in dieser Form auch über eine längere Zeit gelagert oder nahe zum vorgesehenen Verwendungsort überführt werden. Die fertigen Papierfliesbeutel sind nun bereit für den letzten Verarbeitungs- und Verpackungsschritt.

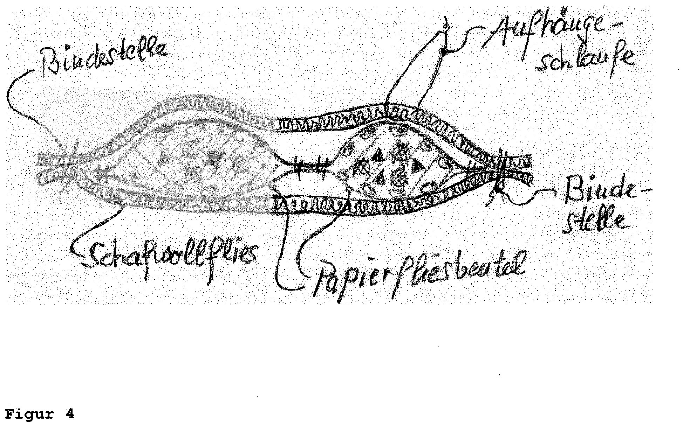

Weitere Schritte einer Endverpackung und die Fertigung zum Saatpaket werden mit der Figur 4 beschrieben.

Hierzu werden die fertigen Papierfliesbeutel einzeln in ein vorkonfektioniertes Schafwollflies als Säckchen gesteckt. Möglich sind auch mehrere Papierfliesbeutel, indem dazu das Schafwollflies als Säcklein auf die dafür vorgesehene Länge geschnitten wird. Das Schafwollfliessäcklein weist eine Längsnaht auf, ist auf ein bestimmtes Maß oder einer bestimmten Länge abgeschnitten, wie zum Beispiel 1/3 Breite und 2/3 Länge der vorgesehenen Konfektionsgröße. An einem Ende ist das Schafwollfliessäcklein bereits mittels einer Schnürung als Bindestelle aus Naturfasern, ähnlich einer Wurst, verschlossen.
1.Die Schafwollflieshüllsäcklein werden auf die gewünschte Größe konfektioniert, zum Beispiel 1/3 Breite und 2/3 Länge, zugeschnitten, in der Längsrichtung einmal gefaltet, so dass eine neue Größe von 1/6 Breite und 2/3 Länge entsteht. In der Längsrichtig wird nun die Unter- und Oberseite am Rand entlang zugenäht. Es entsteht eine schlauchartige Ausführung mit Außennaht.
   1.a Als Variante kann der Papierfliesbeutel vor dem Falten und Zunähen des Schafwollflieses bereits auf dem zugeschnittenen Schafwollflies positioniert werden. Erst jetzt wird die Längsnaht der Unter- und Oberseite vom gefalteten Schafwollflies erstellt. Es entsteht eine schlauchartige Form mit bereits inliegendem Papierfliesbeutel.
2.Das eine Ende vom Schafwollfliessäcklein wird mit einer Schnürung als Bindestelle als Fadenbindung verschlossen.
3.Der Papierfliesbeutel wird in das noch offene Ende vom Schafwollfliessäcklein gesteckt.
4.Dann wird auch das zweite Ende vom Schafwollfliessäcklein mittels einer Schnürung als Fadenbindung verschlossen. Das Schafwollfliessäcklein hat nun eine ähnliche Form einer dicken Wurst erhalten.
5.Etwa im ersten Drittel innerhalb der ganzen Länge vom Schafwollfliesspaket wird eine Schlaufe angebracht. Dazu wird eine Falte im Schafwollflies gebildet. Durch die Falte wird eine Nadel gestoßen, welche ein Stück Schnur von vorbestimmter Länge mitzieht.
6.Die Schnur wird nach dem Durchstoßen der Schafwollfliesfalte an beiden Enden zusammengeknüpft, so dass sich eine geschlossene Schlaufe bildet. Die Aufhängeschlaufe dient als Aufhängungsmöglichkeit des Saatpaketes. Die Schlaufe verbindet das Saatpaket bis zum Abwurf an den vorgesehenen Haltevorrichtungen an Maschinen und mobilen Geräten, wie Katapult, Flugzeugen oder Drohnen.

Das Saatpaket ist nun fertig fabriziert und bereit für die Lagerung oder anschließender Anwendung.

### Bezugszeichen

- 1: Saatpaket
- 2: Umhüllung Schafwolle
- 3: Geruchsstoff
- 4: Ton-Erde-Holz-Mischung mit Dünger
- 5: Grassamen
- 6: Baumsamen
- 7: Klebung

## Patentansprüche

1. Saatpaket **dadurch gekennzeichnet,** wobei eine äußere Umhüllung gegeben ist, welche jeweils seitlich dicht geschlossen und eine Mischung mit Dünger, Geruchsstoffen sowie verschiedenen Samen beinhaltet.
